(19) Europäisches Patentamt
European Patent Office
Office européen des brevets

(11) **EP 2 059 430 B1**

(12) **EUROPÄISCHE PATENTSCHRIFT**

(45) Veröffentlichungstag und Bekanntmachung des Hinweises auf die Patenterteilung:
**11.10.2017 Patentblatt 2017/41**

(21) Anmeldenummer: **07803069.9**

(22) Anmeldetag: **30.08.2007**

(51) Int Cl.:
*B60W 20/00* (2016.01)          *B60K 6/12* (2006.01)
*B60K 6/48* (2007.10)          *B60W 10/02* (2006.01)
*B60W 10/08* (2006.01)          *B60W 10/06* (2006.01)

(86) Internationale Anmeldenummer:
**PCT/EP2007/059060**

(87) Internationale Veröffentlichungsnummer:
**WO 2008/025825 (06.03.2008 Gazette 2008/10)**

(54) **VERFAHREN ZUM BETREIBEN EINES HYBRIDANTRIEBS**

METHOD FOR OPERATING A HYBRID DRIVE

PROCÉDÉ POUR FAIRE FONCTIONNER UN SYSTÈME DE PROPULSION HYBRIDE

(84) Benannte Vertragsstaaten:
**DE FR GB IT**

(30) Priorität: **30.08.2006 DE 102006040638**

(43) Veröffentlichungstag der Anmeldung:
**20.05.2009 Patentblatt 2009/21**

(73) Patentinhaber: **Robert Bosch GmbH**
**70442 Stuttgart (DE)**

(72) Erfinder:
• **GLORA, Michael**
**71706 Markgroeningen (DE)**

• **ANZ, Ruprecht**
**71272 Renningen (DE)**
• **WERNER, Michael**
**74076 Heilbronn (DE)**
• **FAUTZ, Oliver**
**71634 Ludwigsburg (DE)**

(56) Entgegenhaltungen:
DE-A1- 10 209 514          DE-A1-102006 016 133
DE-A1-102007 008 477          US-A- 4 387 783
US-A- 5 993 351          US-A1- 2006 102 394

EP 2 059 430 B1

**Beschreibung**

Die Erfindung betrifft ein Verfahren zum Betreiben eines als Parallelhybrid ausgebildeten, einen Antriebsstrang aufweisenden Hybridantriebs, insbesondere für ein Kraftfahrzeug, mit mindestens einem Verbrennungsmotor und mindestens einer elektrischen oder hydraulischen Maschinenvorrichtung, wobei zwischen Verbrennungsmotor und elektrischer oder hydraulischer Maschinenvorrichtung eine Trennkupplung angeordnet sein kann und - in Abtriebsrichtung gesehen - die elektrische Maschinenvorrichtung oder die hydraulische Maschinenvorrichtung dem Verbrennungsmotor nachgeschaltet ist.

Stand der Technik

Betätigt ein Fahrer bei Geschwindigkeiten eines Kraftfahrzeugs größer null das Fahrpedal nicht, so erwartet er normalerweise, dass das Fahrzeug verzögert, auch wenn er die Bremse nicht betätigt. Bei einem konventionellen Fahrzeug, dessen Antriebseinheit lediglich aus einem Verbrennungsmotor besteht, wird die Verzögerung durch ein Verzögerungsmoment bestimmt, welches durch den unbefeuerten, aber mitgeschleppten Verbrennungsmotor entstehen. Dieses entstehende Verzögerungsmoment ist dabei unter anderem stark von der Temperatur des Verbrennungsmotors abhängig. Insbesondere kurz nach einem Kaltstart ist das Verzögerungsmoment aufgrund hoher Reibverluste besonders hoch. Das Verzögerungsmoment wird in einer Steuereinheit berechnet und dient als Fahrpedalaufsetzpunkt als Bezugspunkt für das Fahrerwunschmoment für Fahrpedalstellungen größer null.

Bei einem Hybridfahrzeug mit einer Elektrooder einer Hydraulikmaschine kann diese beispielsweise dazu verwendet werden, temperaturbedingte Schwankungen im Verzögerungsmoment auszugleichen. Die Elektromaschine bzw. die Hydraulikmaschine kann auch dazu verwendet werden, kinetische Energie zu rekuperieren und einen geeigneten Energiespeicher zu laden.

Bei einem Hybridfahrzeug, das zwischen dem Verbrennungsmotor und der elektrischen Maschine oder der Hydraulikmaschine eine Trennkupplung aufweist, kann diese getrennt werden, sodass der Verbrennungsmotor keinen Einfluss mehr auf den übrigen Antriebsstrang hat beziehungsweise nicht mehr wirkverbunden mit diesem ist.

Die Offenlegungsschrift US 5,993,351 A zeigt ein Verfahren, bei welchem eine Trennkupplung zwischen einem Verbrennungsmotor und einer elektrischen Maschine geöffnet wird, wenn ein Drehmoment der elektrischen Maschine einem geschätzten Reibungsmoment beziehungsweise Schleppmoment des Verbrennungsmotors entspricht, sodass die Trennkupplung erst dann geöffnet wird, wenn die elektrische Maschine das Schleppmoment aufnehmen kann. Um einen Ruck beim Aufbringen des Schleppmoments zu vermeiden, wird dem Verbrennungsmotor eine weitere elektrische Maschine zugeordnet, die mit dem Verbrennungsmotor direkt, also ohne Zwischenschaltung einer Trennkupplung, verbunden ist. Die beiden elektrischen Maschinen werden auf ein gewünschtes Drehmoment eingestellt, noch bevor die Trennkupplung geöffnet wird, sodass, wenn die Trennkupplung geöffnet wird, kein Ruck erfolgt.

Offenbarung der Erfindung

Die Erfindung gilt für ein Hybridfahrzeug mit einer Brennkraftmaschine und wenigstens einer elektrischen Maschine. Anstelle einer elektrischen Maschine kann auch eine hydraulische Maschine eingesetzt werden. Es handelt sich dann um einen hydraulischen oder hydrostatischen Hybrid. Als Energiespeicher wird dann ein Druckbehälter mit einer mehr oder weniger komprimierten Gasblase eingesetzt. Die Beschreibung des erfindungsgemäßen Verfahrens mit den Merkmalen des Anspruchs 1 erfolgt im Wesentlichen anhand eines Ausführungsbeispiels mit einer elektrischen Maschine, sie gilt sinngemäß für einen hydraulischen oder hydrostatischen Hybrid.

Erfindungsgemäß wird die Trennkupplung im Schleppbetrieb, also wenn der Verbrennungsmotor unbefeuert mitgeschleppt wird, getrennt, wenn ein vorgebbares Schleppmoment von der elektrischen Maschinenvorrichtung aufgenommen werden kann. Für den Fall also, dass die elektrische Maschinenvorrichtung das vorgegebene Schleppmoment vollständig aufnehmen beziehungsweise erbringen kann, sodass das durch die Verluste des mitgeschleppten Verbrennungsmotors erzeugte Verzögerungsmoment nicht notwendig ist um das vorgegeben Schleppmoment zu erreichen, wird die Trennkupplung getrennt, sodass das vorgegebene Schleppmoment allein von der elektrischen Maschinenvorrichtung aufgenommen wird. Diese wird im Schleppbetrieb zweckmäßigerweise generatorisch betrieben, wodurch bei getrennter Trennkupplung die maximale generatorische Leistung der elektrischen Maschinenvorrichtung erreicht wird.

Vorteilhafterweise wird das von der elektrischen Maschinenvorrichtung aufnehmbare Schleppmoment in Abhängigkeit von Betriebsparametern der elektrischen Maschinenvorrichtung bestimmt. Natürlich wird das aufnehmbare Schleppmoment auch durch Aufbau und/oder Dimensionierung der elektrischen Maschinenvorrichtung begrenzt, jedoch bedürfen die sich ändernden Betriebsparameter der gesamten elektrischen Maschinenvorrichtung eine besondere Berücksichtigung. So kann ein Schaden an der elektrischen Maschinenvorrichtung von vornherein verhindert werden, wobei die Steuereinheit des Fahrzeugs die Betriebsparameter auswertet und die Trennkupplung entsprechend betätigt.

Zweckmäßigerweise wird als Betriebsparameter der Zustand mindestens eines zur elektrischen Maschinenvorrichtung gehörenden elektrischen Speichers verwendet. Bevorzugt werden dabei die Temperatur und das Ladepotential des elektrischen Speichers betrachtet. Durch Berücksichtigung der Temperatur des elektrischen Speichers wird eine Überhitzung und eine damit einhergehende Zerstörung des Speichers verhindert. Durch Betrachtung des Ladepotentials beziehungsweise des möglichen Ladepotentials wird verhindert, dass der Speicher aufgrund des generatorischen Betriebs über seine Ladekapazität hinaus geladen wird. Dies hätte ebenfalls zerstörerische Folgen für den Speicher.

Vorteilhafterweise wird als Betriebsparameter die Betriebstemperatur einer zur elektrischen Maschinenvorrichtung gehörenden elektrischen Maschine berücksichtigt, sodass diese nicht überhitzt und dabei zerstört wird. Darüber hinaus verschlechtert sich der Wirkungsgrad der elektrischen Maschine mit zunehmender Temperatur. Dies kann durch das erfindungsgemäße Verfahren ebenfalls berücksichtigt werden. Auch die Temperatur der Brennkraftmaschine oder bei einem hydraulischen Hybrid die Temperatur einer Komponente des Hydrauliksystems kann berücksichtigt werden.

Erfindungsgemäß wird der elektrischen Maschinenvorrichtung beziehungsweise der elektrischen Maschine ein Sollmoment in Abhängigkeit des vorgebbaren Schleppmoments vorgegeben, wobei das Sollmoment erfindungsgemäß das aufnehmbare Schleppmoment betragsmäßig nicht überschreitet. Natürlich kann das Sollmoment auch einen betragsmäßig geringeren Wert aufweisen. Für den Fall, dass die Trennkupplung geschlossen ist, wird das vorgegebene Schleppmoment auf den Verbrennungsmotor und die elektrische Maschinenvorrichtung verteilt, sodass das Sollmoment in diesem Fall bevorzugt in Abhängigkeit von dem durch den Verbrennungsmotor generierten Verzögerungsmoment so vorgegeben wird, dass das vorgebbare Schleppmoment realisiert wird.

In einer Weiterbildung der Erfindung wird das Schleppmoment reproduzierbar vorgegeben, das heißt dass unabhängig von betriebsbedingten Verlusten im Antriebsstrang, also beispielsweise von Verlustmomenten in dem Verbrennungsmotor, der elektrischen Maschine und/oder einem Getriebe, ein Fahrer eine reproduzierbare Verzögerung des Fahrzeugs spürt.

Vorteilhafterweise wird das Schleppmoment in Abhängigkeit von der Drehzahl des Verbrennungsmotors vorgegeben. Dadurch kann ein Schleppmoment beispielsweise mit zunehmender Drehzahl betragsmäßig geringer vorgegeben werden.

Vorteilhafterweise wird das Schleppmoment in Abhängigkeit von der Fahrgeschwindigkeit vorgegeben. Bei höheren Geschwindigkeiten-erwartet ein Fahrer, wenn er seinen Fuß vom Fahrpedal nimmt, eine geringere Verzögerung als bei niedrigen Geschwindigkeiten. Somit ist es vorteilhaft, wenn das Schleppmoment mit zunehmender Fahrgeschwindigkeit betragsmäßig geringer vorgegeben wird.

Zweckmäßigerweise wird das Schleppmoment in Abhängigkeit von einem gewählten Gang eines Getriebes des Hybridantriebs vorgegeben. Dies hat die bereits oben genannten Vorteile zur Folge. In niedrigen Gängen erwartet ein Fahrer ein starkes Verzögerungsmoment, wenn er während der Fahrt seinen Fuß vom Fahrpedal nimmt, wohingegen bei höheren Gängen der Fahrer ein eher geringes Verzögerungsmoment erwartet.

Vorteilhafterweise wird das Schleppmoment einem Kennfeld und/oder einer Kennlinie entnommen, wobei das Kennfeld und/oder die Kennlinie in einem nicht flüchtigen Speicher einer Antriebssteuerungseinheit hinterlegt wird.

Nach einer Weiterbildung der Erfindung wird das Sollmoment in Abhängigkeit des Zustands der Trennkupplung vorgegeben. So wird das Sollmoment höher ausfallen, wenn die Trennkupplung geöffnet ist, da zum Erreichen des vorgebbaren Schleppmoments allein die elektrische Maschinenvorrichtung verwendet wird, und kein Verlustmoment von dem Verbrennungsmotor genutzt werden kann. Ist die Kupplung geschlossen, so fällt das Sollmoment entsprechend niedriger aus. Es ist somit möglich das vorgegebene Schleppmoment unabhängig von dem Zustand der Trennkupplung zu realisieren.

Vorteilhafterweise wird das Sollmoment in Abhängigkeit von mindestens einem Nebenaggregat-Verlustmoment des Antriebsstrangs vorgegeben. Wird zum Beispiel während der Fahrt eine Klimaanlage zugeschaltet, bewirkt der zugehörige Klimakompressor ein weiteres Verlustmoment im Antriebsstrang, welches sich auf das Schleppmoment auswirkt. Daher ist es vorteilhaft, wenn das Sollmoment so vorgegeben wird, dass das entstandene Verlustmoment ausgeglichen und das vorgegebene Schleppmoment erbracht wird. Vorteilhafterweise wird das Sollmoment in Abhängigkeit von Antriebsstrangverlusten, wie zum Beispiel temperaturabhängige Reibverluste in Lagern des Antriebstrangs, vorgegeben. Die elektrische Maschinenvorrichtung kompensiert vorteilhafterweise diese Antriebsstrangverluste, sodass zum Beispiel der Fahrer sowohl nach längerer Fahrt als auch nach einem Kaltstart das gleiche, reproduzierbare Verzögerungsmoment erfährt.

Vorteilhafterweise wird der Verbrennungsmotor, wenn die Trennkupplung getrennt ist, abgestellt, wodurch zusätzlich der Kraftstoffverbrauch der Hybridantriebsvorrichtung gesenkt wird.

Die Elektromaschine kann in besonders vorteilhafter Weise dazu verwendet werden, kinetische Energie zu rekuperieren, unabhängig davon, ob es sich um ein serielles, paralleles oder leistungsverzweigtes System handelt. Dies gilt sowohl für Fahrzeuge mit elektrischem als auch für Fahrzeuge mit hydraulischem Energiespeicher. Auch bei einem rein elektrisch betriebenen Fahrzeug ist Rekuperation möglich, sobald der Fahrer vom Gas- bzw. Fahrpedal nimmt. Es wird dann ein das Fahrzeug verzögerndes Sollmoment vorgegeben sobald der Fahrerwunsch erkannt ist. Diese Verzögerungsmoment wird dazu genutzt, den Energiespeicher, beispielsweise eine Batterie, einen Supercap oder einen hydraulischen Druckspeicher zu füllen. Wird Wert auf einen hohen Fahrkomfort gelegt, wird das Moment sobald der Fahrer vom Gas geht nur sanft erhöht.

Werden dagegen beim Fahrkomfort Abstriche erlaubt oder soll die rekuperierbare kinetische Energie möglichst hoch sein, wird zunächst um einen Ruck zu vermeiden nur ein erstes kleines bremsendes Moment vorgegeben. Das bremsende Moment der elektrischen Maschine wird dann nach einem zeitlichen Verlauf erhöht bis zu einem maximalen Wert bzw. bis zum Stillstand des Fahrzeugs. Die dadurch erhaltene zusätzliche Rekuperationsenergie wird zur Ladung des Energiespeichers verwendet. Diese Ausgestaltung der Erfindung ist besonders vorteilhaft in Fahrzyklen mit häufigem Anfahren und Abbremsen einsetzbar.

Wird anstelle einer elektrischer Maschine zum Antrieb bzw. zur Bildung eines Verzögerungsmoments oder Rekuperation eine hydraulische Maschine eingesetzt, und als Energiespeicher ein Druckbehälter mit einer mehr oder weniger komprimierten Gasblase vorgesehen, kann ein besondere Vorteile aufweisender ein hydraulischer oder hydrostatischer Hybrid gebildet werden. Ein solcher hydraulischer oder hydrostatischer Hybrid hat in bestimmten Fahrzyklen Vorteile gegenüber einem elektrischen Hybrid.

Kurze Beschreibung der Zeichnungen

Im Folgenden soll die Erfindung anhand einer Zeichnung näher erläutert werden. Dazu zeigt die

Figur 1:    ein schematisches Ausführungsbeispiel des erfindungsgemäßen Verfahrens.
Figur 2:    ein möglicher Verlauf des Verzögerungsmoments.

Ausführungsformen der Erfindung

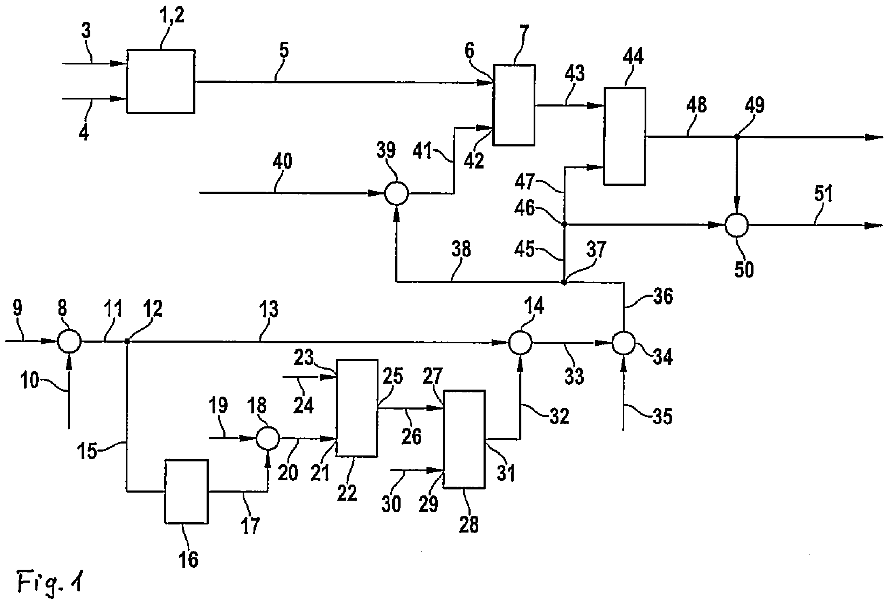

Die Figur 1 zeigt schematisch in einem Blockschaltbild ein Ausführungsbeispiel des erfindungsgemäßen Verfahrens für einen elektrischen Hybrid. Das Blockschaltbild zeigt ein Element 1, welches beispielsweise eine Steuereinheit 2 einer Hybridantriebsvorrichtung darstellt und mittels mindestens einem gespeicherten Kennfeld oder Kennlinie eine Schleppmomentvorgabe für die Hybridantriebsvorrichtung berechnet. Bei der hier betrachteten Hybridantriebsvorrichtung handelt es sich um einen Antriebsstrang mit einem Verbrennungsmotor und einer elektrischen Maschinenvorrichtung, wobei Verbrennungsmotor und elektrische Maschinenvorrichtung mittels einer trennbaren Trennkupplung wirkverbunden sind.

Über eine Verbindung 3 erhält die Steuereinheit ein Signal, welches die Geschwindigkeit des Fahrzeugs wiedergibt, und über eine Verbindung 4 erhält sie ein Signal, welches wiedergibt, welcher Gang eines Getriebes der Antriebseinrichtung eingelegt ist. Die Steuereinheit 2 berechnet aus den eingehenden Signalen 3 und 4 und dem gespeicherten Kennfeld beziehungsweise der Kennlinie ein Schleppmoment, welches über eine Verbindung 5 ausgegeben wird.

Alternativ können auch anstatt der Geschwindigkeit und dem eingelegten Gang über die Verbindungen 3 und 4 eine Drehzahl des Antriebsstrangs, wie zum Beispiel die Drehzahl des Verbrennungsmotors oder der elektrischen Maschine, und das Übersetzungsverhältnis eines zum Antriebsstrang gehörenden Getriebes verwendet werden. Über die Verbindung 5 wird das von der Steuereinheit 2 bestimmte Schleppmoment zu einem ersten Eingang 6 eines Maximumsauswahlelements 7 geführt.

An einer Subtraktionsstelle 8 werden einem Reibmoment 9 des Verbrennungsmotors Nebenaggregat-Verlustmomente 10 von mindestens einem dem Verbrennungsmotor zugehörigen Nebenaggregat abgezogen. Das dadurch berechnete Verzögerungsmoment wird über eine Verbindung 11 zu einer Verzweigung 12 geführt. Von der Verzweigung 12 führt eine Verbindung 13 direkt zu einem Eingang einer Multiplikationsstelle 14. Eine weitere Verbindung 15 führt von der Verzweigung 12 zu einem Element 16, in dem der Betrag des von der Subtraktionsstelle 8 kommenden negativen Verzögerungsmoment bestimmt und über eine Verbindung 17 zu einer Divisionsstelle 18 geführt wird, bei der ein von einer Trennkupplung, die zwischen dem Verbrennungsmotor und der elektrischen Maschine angeordnet ist, übertragenes Moment 19 durch das Verzögerungsmoment, welches an der motorseitigen Seite der Trennkupplung anliegt, geteilt wird.

Das Ergebnis wird über eine Verbindung 20 zu einem ersten Eingang 21 einer Maximumsauswahl 22 geführt. An einem zweiten Eingang 23 der Maximumsauswahl 22 erhält die Maximumsauswahl 22 einen Vergleichswert 24, der in diesem Fall gleich null ist. Von einem Ausgang 25 führt eine Verbindung 26 zu einem ersten Eingang 27 einer Minimumsauswahl 28, welcher an einem zweiten Eingang 29 einen Vergleichswert 30, der in diesem Fall gleich eins ist, erhält.
Durch die Minimumsauswahl 28 und die Maximumsauswahl 22 wird das von der Divisionsstelle 18 kommende Ergebnis von einem Wertbereich von null bis eins begrenzt, und von einem Ausgang 31 der Minimumsauswahl 28 über eine Verbindung 32 zu einem zweiten Eingang der Multiplikationsstelle 14 geführt, sodass das von der Subtraktionsstelle 8 berechnete Verzögerungsmoment mit dem begrenzten Wert multipliziert wird, wobei der begrenzte Wert ausdrückt, welcher Anteil des Verzögerungsmoments durch die Trennkupplung auf den Antriebsstrang übertragen wird. Das von der Trennkupplung übertragene Moment 19 wird in der dem Fachmann bekannten Art und Weise berechnet.

Der von der Multiplikationsstelle 14 berechnete Wert wird über eine Verbindung 33 zu einem Eingang einer zweiten Subtraktionsstelle 34 geführt, bei der aus dem Antriebsstrang herrührende Verlustmomente 35 von der Multiplikationsstelle 14 kommenden Ergebnis subtrahiert werden. Das Ergebnis wird über eine Verbindung 36 zu einer Verzweigung 37 geführt, wobei das Ergebnis das mechanische Gesamtschleppmoment in Abhängigkeit vom Zustand der Trennkupplung darstellt, wobei das mechanische Gesamtschleppmoment ein Wert kleiner null ist. Von der Verzweigung 37 führt eine erste Verbindung 38 zu einem Eingang einer Addierstelle 39.

An einem zweiten Eingang wird der Addierstelle 39 das minimal mögliche Drehmoment der elektrischen Maschine 40 zugeführt und mit dem mechanischen Gesamtschleppmoment addiert. Das minimal mögliche Moment der elektrischen Maschine 40 entspricht dabei dem betragsmäßig größten Drehmoment der elektrischen Maschine im generatorischen Betrieb beziehungsweise dem aufnehmbaren Schleppmoment der elektrischen Maschinenvorrichtung. Es wird auf eine der dem Fachmann bekannten Art und Weise bestimmt. Es wird dabei vorteilhafter Weise in Abhängigkeit der Temperatur der elektrischen Maschine, eines zur elektrischen Maschinenvorrichtung zugehörigen elektrischen Speichers und/oder dem Ladezustand des elektrischen Speichers bestimmt. Da es ein das Fahrzeug verzögerndes Moment ist, gilt, dass das minimal mögliche Moment der elektrischen Maschine kleiner oder gleich null ist.

Die von der Addierstelle 39 berechnete Summe wird über die Verbindung 41 zu einem zweiten Eingang 42 der Maximumsauswahl 7 geführt. Diese begrenzt das von der Steuereinheit 2 kommende Schleppmoment auf das Mindestschleppmoment, also den Wert, der minimal möglich ist. Dieser wird über eine Verbindung 43 zu einer Minimumsauswahl 44 geführt, die den minimal möglichen Wert mit dem mechanischen Gesamtschleppmoment, welches von der Verzweigung 37 über eine Verbindung 45, einer Verzweigung 46 und einer Verbindung 47 der Minimumsauswahl 44 zugeführt wird. Durch die Minimumsauswahl 44 ergibt sich das tatsächliche Verzögerungsmoment des Fahrzeugs und wird über eine Verbindung 48 zu einer Verzweigung 49 geführt, von der es abgreifbar ist. Von der Verzweigung 49 und der Verzweigung 46 führt jeweils eine Verbindung zu einer Subtraktionsstelle 50, bei der von dem tatsächlichen Verzögerungsmoment das mechanische Gesamtschleppmoment abgezogen und das Ergebnis über einen Ausgang 51 ausgegeben wird.

Gleicht das tatsächliche Verzögerungsmoment dem mechanischen Gesamtschleppmoment, so sind die mechanischen Verluste größer als das begrenzte Mindestschleppmoment. In diesem Fall gibt es keine Möglichkeit einen elektrischen Speicher, zum Beispiel eine Batterie der Hybridantriebseinrichtung zu laden, ohne dass sich das tatsächliche Verzögerungsmoment noch weiter von dem durch die Steuereinheit 2 vorgegebenen Schleppmoment für ein nicht getretenes Fahr- oder Bremspedal entfernt. Ist die Trennkupplung geschlossen, und gilt, dass das maximale Rekuperationsmoment der elektrischen Maschine größer oder gleich ist wie das Verzögerungsmoment des Verbrennungsmotors, welches über die Verbindung 11 ausgegeben wird, dann ist aus Sicht des Schleppmoments die Bedingung erfüllt, die Trennkupplung zu öffnen, da das vorgegebene Schleppmoment allein von der elektrischen Maschine aufgenommen werden kann. Das vom Antriebsstrang kommende Gesamtschleppmoment wird dann entsprechend größer, betragsmäßig kleiner, werden, da die Verlustmomente der Verbrennungsmaschine und der ihr zugeordneten Nebenaggregate wegfallen. Aus der von der Subtraktionsstelle 50 berechneten Differenz ergibt sich das Sollmoment, mit dem die elektrische Maschine betrieben werden muss, um das vorgegebene Schleppmoment zu realisieren.

Das Verfahren ermöglicht also in vorteilhafter Weise, in Abhängigkeit eines vorgegeben Schleppmoments und des Betriebszustands der Hybridantriebsvorrichtung im Schleppbetrieb die Trennkupplung zu öffnen, wenn das Schleppmoment allein durch die elektrische Maschine aufgebracht beziehungsweise aufgenommen werden kann, und somit in vorteilhafter Weise ein maximales Rekuperationsmoment zum Laden eines elektrischen Speichers genutzt werden kann. Ist die Trennkupplung getrennt beziehungsweise geöffnet, so wird in vorteilhafter Weise der Verbrennungsmotor abgestellt, sodass außerdem Kraftstoff eingespart wird.

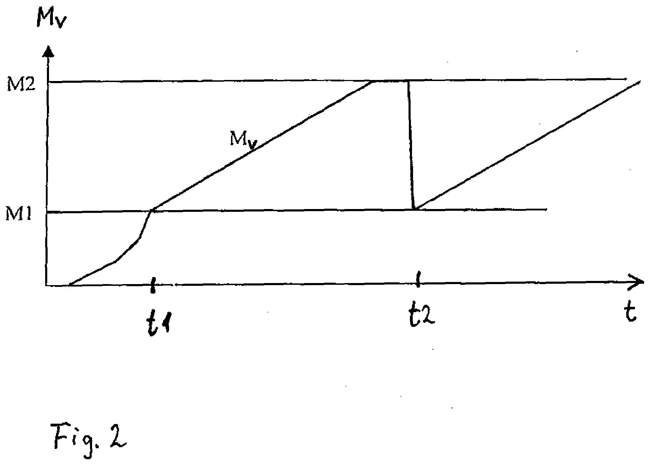

Werden beim Fahrkomfort Abstriche erlaubt oder soll die rekuperierbare kinetische Energie möglichst hoch sein, wird in eine Ausgestaltung der Erfindung zunächst um einen Ruck zu vermeiden nur ein erstes kleines bremsendes Moment M1 vorgegeben. Das bremsende Moment der elektrischen Maschine wird dann nach einem zeitlichen Verlauf von M1 erhöht bis zu einem maximalen Wert M2 bzw. bis zum Stillstand des Fahrzeugs. Figur 2 zeigt beispielhaft einen zeitlichen Verlauf des Betrags des Verzögerungsmoments. Dabei geht der Fahrer zum Zeitpunkt t1 vom Gas und zum Zeitpunkt t2 beendet der Fahrer den Verzögerungswunsch durch leichtes Antippen des Gaspedals.

Die entstehende zusätzliche Rekuperationsenergie wird zur Ladung des Energiespeichers verwendet. Diese Ausgestaltung der Erfindung ist besonders vorteilhaft in Fahrzyklen mit häufigem Anfahren und Abbremsen, beispielsweise bei Müllfahrzeugen, Stadtbussen oder allgemein im Stadtverkehr einsetzbar.

Wie das Verzögerungsmoment M1 in Abhängigkeit von Geschwindigkeit, Triebstrangübersetzung oder dem Zustand von Kupplungen im Antriebsstrang vorgegeben werden kann, wurde vorstehend bereits beschrieben. Auf die gleiche Weise kann ein Sollmoment M2 vorgegeben werden, wobei durch Bedatung der dafür notwendigen Parameter sichergestellt werden kann, dass das Verzögerungsmoment M2>=M1 ist. Das Verzögerungsmoment Mv berechnet sich durch Interpolation zwischen M1 und M2. Beispielsweise nach der Gleichung:

$$Mv = M1 + x(t)(M2-M1) + M1$$

Wobei t die Zeit bezeichnet und gilt:

x(t=0) = 0 und x(t) für t gegen unendlich <=1 ist.

Der Interpolationsfaktor x kann zusätzlich zur Zeitabhängigkeit auch von weiteren physikalischen Größen abhängig sein, beispielsweise von der Geschwindigkeit, der Triebstrangübersetzung usw..

Die vorstehend beschriebenen Lösungen bzw. Verfahren für einen Hybrid mit elektrischer Maschine und elektrischem Energiespeicher lassen sich auch für einen Hydraulikhybrid mit einer hydraulischen Maschine für den Antrieb und einem Druckbehälter als Energiespeicher realisieren. Auch ein Hybridfahrzeug mit einer Kombination von Brennkraftmaschine, elektrischer Maschine und hydraulischer Maschine ist denkbar.

**Patentansprüche**

1. Verfahren zum Betreiben eines als Parallelhybrid ausgebildeten, einen Antriebsstrang aufweisenden Hybridantriebs, insbesondere für ein Kraftfahrzeug, mit mindestens einem Verbrennungsmotor und mindestens einer elektrischen Maschinenvorrichtung oder mindestens einer hydraulischen Maschinenvorrichtung, wobei zwischen Verbrennungsmotor und elektrischer beziehungsweise hydraulischer Maschinenvorrichtung eine Trennkupplung angeordnet ist und - in Abtriebsrichtung gesehen - die elektrische beziehungsweise hydraulische Maschinenvorrichtung dem Verbrennungsmotor nachgeschaltet ist, wobei die Trennkupplung im Schleppbetrieb getrennt wird, wenn ein vorgebbares Schleppmoment von der elektrischen beziehungsweise hydraulischen Maschinenvorrichtung aufgenommen werden kann, und wobei der elektrischen beziehungsweise hydraulischen Maschinenvorrichtung ein Sollmoment in Abhängigkeit des vorgebbaren Schleppmoments vorgegeben wird, **dadurch gekennzeichnet, dass** zunächst ein kleines, verzögerndes Sollmoment (M1) vorgegeben wird, und dann ein Übergang auf einen Maximalwert (M2) des Betrags des verzögernden Sollmoments über die Zeit (t) kontinuierlich erfolgt, wobei das Sollmoment so vorgegeben wird, dass das aufnehmbare Schleppmoment nicht überschritten wird.

2. Verfahren nach Anspruch 1, **dadurch gekennzeichnet, dass** das von der elektrischen Maschinenvorrichtung aufnehmbare Schleppmoment in Abhängigkeit von Betriebsparametern der elektrischen Maschinenvorrichtung bestimmt wird.

3. Verfahren nach Anspruch 1, **dadurch gekennzeichnet, dass** das von der elektrischen Maschinenvorrichtung aufnehmbare Schleppmoment in Abhängigkeit von Betriebsparametern der hydraulischen Maschinenvorrichtung bestimmt wird.

4. Verfahren nach einem der vorhergehenden Ansprüche 1 oder 2, **dadurch gekennzeichnet, dass** als Betriebsparameter der Zustand mindestens eines zur elektrischen Maschinenvorrichtung gehörenden elektrischen Speichers verwendet wird.

5. Verfahren nach einem der vorhergehenden Ansprüche 1 oder 3, **dadurch gekennzeichnet, dass** als Betriebsparameter der Zustand mindestens eines zur hydraulischen Maschinenvorrichtung gehörenden hydraulischen Speichers verwendet wird.

6. Verfahren nach einem der vorhergehenden Ansprüche, **dadurch gekennzeichnet, dass** als Betriebsparameter die Betriebstemperatur einer zur elektrischen Maschinenvorrichtung gehörenden elektrischen Maschine und/oder die Temperatur der Brennkraftmaschine verwendet wird.

7. Verfahren nach einem der vorhergehenden Ansprüche, **dadurch gekennzeichnet, dass** als Betriebsparameter die Betriebstemperatur einer zur hydraulischen Maschinenvorrichtung gehörenden Hydraulikkomponente und/oder die Temperatur der Brennkraftmaschine verwendet wird.

8. Verfahren nach einem der vorhergehenden Ansprüche, **dadurch gekennzeichnet, dass** das vorgebbare Schleppmoment reproduzierbar vorgegeben wird.

9. Verfahren nach einem der vorhergehenden Ansprüche, **dadurch gekennzeichnet, dass** das vorgebbare Schleppmoment in Abhängigkeit von der Drehzahl des Verbrennungsmotors vorgegeben wird.

10. Verfahren nach einem der vorhergehenden Ansprüche, **dadurch gekennzeichnet, dass** das vorgebbare Schleppmoment in Abhängigkeit von der Fahrgeschwindigkeit vorgegeben wird.

11. Verfahren nach einem der vorhergehenden Ansprüche, **dadurch gekennzeichnet, dass** das vorgebbare Schleppmoment in Abhängigkeit von einem gewählten Gang eines Getriebes des Hybridantriebs vorgegeben wird.

12. Verfahren nach einem der vorhergehenden Ansprüche, **dadurch gekennzeichnet, dass** das vorgebbare Schleppmoment einem Kennfeld und/oder einer Kennlinie entnommen wird.

**13.** Verfahren nach einem der vorhergehenden Ansprüche, **dadurch gekennzeichnet, dass** das Sollmoment in Abhängigkeit des Zustands der Trennkupplung vorgegeben wird.

**14.** Verfahren nach einem der vorhergehenden Ansprüche, **dadurch gekennzeichnet, dass** das Sollmoment in Abhängigkeit von mindestens einem Nebenaggregat-Verlustmoment vorgegeben wird.

**15.** Verfahren nach einem der vorhergehenden Ansprüche, **dadurch gekennzeichnet, dass**, wenn die Trennkupplung getrennt ist, der Verbrennungsmotor abgestellt wird.

**16.** Verfahren nach einem der vorhergehenden Ansprüche, **dadurch gekennzeichnet, dass** das das Fahrzeug verzögernde Sollmoment auf Werte einstellbar ist, die betragsmäßig größer sind als ein verzögerndes Sollmoment M1 und zeitlich veränderbar sind.

**17.** Verfahren nach Anspruch 16, **dadurch gekennzeichnet, dass** der Übergang von (M1) auf (M2) über die Zeit (t) nach einer Interpolationsformel erfolgt.

**18.** Verfahren nach Anspruch 17, **dadurch gekennzeichnet, dass** die Interpolationsformel lautet:

$$Mv = M1 + x(t)(M2\text{-}M1) + M1$$

Wobei t die Zeit bezeichnet und gilt:

$x(t=0) = 0$ und $x(t)$ für t gegen unendlich <=1 ist.

**19.** Verfahren nach Anspruch 18, **dadurch gekennzeichnet dass** der Interpolationsfaktor x (t) zusätzlich zur Zeitabhängigkeit auch von weiteren physikalischen Größen abhängig ist, insbesondere von der Geschwindigkeit, der Triebstrangübersetzung usw..

**Claims**

**1.** Method for operating a hybrid drive having a drive train which is embodied as a parallel hybrid, in particular for a motor vehicle, having at least one internal combustion engine and at least one electrical machine device or at least one hydraulic machine device, wherein a separating clutch is arranged between the internal combustion engine and the electric or hydraulic machine device, and, when viewed in the drive direction, the electrical or hydraulic machine device is connected downstream of the internal combustion engine, wherein the separating clutch is separated in the drag mode if a predefineable drag torque can be taken up by the electrical or hydraulic machine device, and wherein a setpoint torque is predefined to the electrical or hydraulic machine device as a function of the predefineable drag torque, **characterized in that** first a low decelerating setpoint torque (M1) is predefined, and then a transition to a maximum value (M2) of the absolute value of the decelerating setpoint torque takes place continuously over time (t), wherein the setpoint torque is predefined in such a way that the drag torque which can be taken up is not exceeded.

**2.** Method according to Claim 1, **characterized in that** the drag torque which can be taken up by the electrical machine device is determined as a function of operating parameters of the electrical machine device.

**3.** Method according to Claim 1, **characterized in that** the drag torque which can be taken up by the electrical machine device is determined as a function of operating parameters of the hydraulic machine device.

**4.** Method according to one of the preceding Claims 1 or 2, **characterized in that** the state of at least one electrical accumulator which is associated with the electrical machine device is used as an operating parameter.

**5.** Method according to one of the preceding Claims 1 or 3, **characterized in that** the state of at least one hydraulic accumulator which is associated with the hydraulic machine device is used as an operating parameter.

**6.** Method according to one of the preceding claims, **characterized in that** the operating temperature of an-electrical machine which is associated with the electrical machine device and/or the temperature of the internal combustion engine are/is used as operating parameters.

**7.** Method according to one of the preceding claims, **characterized in that** the operating temperature of one hydraulic component which is associated with the hydraulic machine device and/or the temperature of the internal combustion engine are/is used as operating parameters.

**8.** Method according to one of the preceding claims, **characterized in that** the predefineable drag torque is predefined in a reproducible fashion.

**9.** Method according to one of the preceding claims, **characterized in that** the predefineable drag torque is predefined as a function of the rotational speed of

10. Method according to one of the preceding claims, **characterized in that** the predefineable drag torque is predefined as a function of velocity.

11. Method according to one of the preceding claims, **characterized in that** the predefineable drag torque is predefined as a function of a selected gearbox of the hybrid drive.

12. Method according to one of the preceding claims, **characterized in that** the predefineable drag torque is obtained from a characteristic diagram and/or a characteristic curve.

13. Method according to one of the preceding claims, **characterized in that** the setpoint torque is predefined as a function of the separating clutch.

14. Method according to one of the preceding claims, **characterized in that** the setpoint torque is predefined as a function of at least one secondary-assembly torque loss.

15. Method according to one of the preceding claims, **characterized in that** if the separating clutch is disconnected, the internal combustion engine is switched off.

16. Method according to one of the preceding claims, **characterized in that** the setpoint torque which decelerates the vehicle can be adjusted to values which are higher in terms of absolute value than a decelerating setpoint torque M1 and can be changed over time.

17. Method according to Claim 16, **characterized in that** the transition from (M1) to (M2) takes place over time (t) after an interpolation formula.

18. Method according to Claim 17, **characterized in that** the interpolation formula reads:

$$Mv = M1 + x(t)(M2-M1) + M1$$

where t denotes the time and the following applies:

x(t=0) = 0 and x(t) is for t towards infinity <=1.

19. Method according to Claim 18, **characterized in that**, in addition to the time dependence, the interpolation factor x(t) is also dependent on further physical variables, in particular on the speed, the transmission ratio of the drive train etc.

**Revendications**

1. Procédé de mise en fonctionnement d'un système d'entraînement hybride réalisé sous la forme d'un système hybride parallèle, comportant une chaîne cinématique, notamment destinée à un véhicule automobile, comportant au moins un moteur à combustion interne et au moins un dispositif à machine électrique ou au moins un dispositif à machine hydraulique, dans lequel un embrayage de séparation est disposé entre le moteur à combustion interne et le dispositif à machine électrique ou hydraulique et - lorsqu'il est vu dans la direction entraînée - le dispositif à machine électrique ou hydraulique est monté en aval du moteur à combustion interne, dans lequel l'embrayage de séparation, dans le mode de traction, est débrayé lorsqu'un couple de traction pouvant être prédéterminé peut être absorbé par le dispositif à machine électrique ou hydraulique, et dans lequel un couple théorique est prédéterminé pour le dispositif à machine électrique ou hydraulique en fonction du couple de traction pouvant être prédéterminé, **caractérisé en ce qu'**un faible couple théorique de ralentissement (M1) est prédéterminé en premier lieu, puis un passage à une valeur maximale (M2) de l'intensité du couple théorique de ralentissement au cours du temps (t) est effectué en continu, dans lequel le couple théorique est prédéterminé de manière à ne pas dépasser le couple de traction pouvant être absorbé.

2. Procédé selon la revendication 1, **caractérisé en ce que** le couple de traction pouvant être absorbé par le dispositif à machine électrique est déterminé par le dispositif à machine électrique en fonction de paramètres de fonctionnement.

3. Procédé selon la revendication 1, **caractérisé en ce que** le couple de traction pouvant être absorbé par le dispositif à machine hydraulique est déterminé par le dispositif à machine hydraulique en fonction de paramètres de fonctionnement.

4. Procédé selon l'une quelconque des revendications précédentes 1 ou 2, **caractérisé en ce que** l'état d'au moins un accumulateur électrique appartenant au dispositif à machine électrique est utilisé en tant que paramètre de fonctionnement.

5. Procédé selon l'une quelconque des revendications précédentes 1 ou 3, **caractérisé en ce que** l'état d'au moins un accumulateur hydraulique appartenant au dispositif à machine hydraulique est utilisé en tant que paramètre de fonctionnement.

6. Procédé selon l'une quelconque des revendications précédentes, **caractérisé en ce que** la température de fonctionnement d'une machine électrique appartenant au dispositif à machine électrique et/ou la température du moteur à combustion interne est utilisée en tant que paramètre de fonctionnement.

7. Procédé selon l'une quelconque des revendications précédentes, **caractérisé en ce que** la température de fonctionnement d'un composant hydraulique appartenant au dispositif à machine hydraulique et/ou la température du moteur à combustion interne est utilisée en tant que paramètre de fonctionnement.

8. Procédé selon l'une quelconque des revendications précédentes, **caractérisé en ce que** le couple de traction pouvant être prédéterminé est prédéterminé de manière reproductible.

9. Procédé selon l'une quelconque des revendications précédentes, **caractérisé en ce que** le couple de traction pouvant être prédéterminé est prédéterminé en fonction de la vitesse de rotation du moteur à combustion interne.

10. Procédé selon l'une quelconque des revendications précédentes, **caractérisé en ce que** le couple de traction pouvant être prédéterminé est prédéterminé en fonction de la vitesse de déplacement.

11. Procédé selon l'une quelconque des revendications précédentes, **caractérisé en ce que** le couple de traction pouvant être prédéterminé est prédéterminé en fonction d'un rapport de vitesse sélectionné d'une transmission du système d'entraînement hybride.

12. Procédé selon l'une quelconque des revendications précédentes, **caractérisé en ce que** le couple de traction pouvant être prédéterminé est obtenu à partir d'un champ caractéristique et/ou d'une courbe caractéristique.

13. Procédé selon l'une quelconque des revendications précédentes, **caractérisé en ce que** le couple théorique est prédéterminé en fonction de l'état de l'embrayage de séparation.

14. Procédé selon l'une quelconque des revendications précédentes, **caractérisé en ce que** le couple théorique est prédéterminé en fonction d'au moins un couple de perte d'un groupe auxiliaire.

15. Procédé selon l'une quelconque des revendications précédentes, **caractérisé en ce que** le moteur à combustion interne est arrêté lorsque l'embrayage de séparation est débrayé.

16. Procédé selon l'une quelconque des revendications précédentes, **caractérisé en ce que** le couple théorique ralentissant le véhicule est réglable à des valeurs dont les amplitudes sont supérieures à un couple théorique de ralentissement M1 et qui sont modifiables dans le temps.

17. Procédé selon la revendication 16, **caractérisé en ce que** le passage de (M1) à (M2) au cours du temps (t) est effectué conformément à une formule d'interpolation.

18. Procédé selon la revendication 17, **caractérisé en ce que** la formule d'interpolation est la suivants :

$$Mv = M1 + x(t)(M2-M1) + M1,$$

où t représente le temps et où :

x(t=0) = 0 et où x(t) est <=1 pour t allant vers l'infini.

19. Procédé selon la revendication 18, **caractérisé en ce que** le facteur d'interpolation x(t), en plus de dépendre du temps, dépend également d'autres grandeurs physiques, notamment de la vitesse, du rapport de transmission de la chaîne cinématique, etc.

Fig. 1

EP 2 059 430 B1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5993351 A